# EUROPEAN PATENT APPLICATION

(11) **EP 1 351 446 A1**
(43) Date of publication of application: **08.10.2003**
(21) Application number: 02252402.9
(22) Date of filing: 02.04.2002
(51) Int. Cl.: H04L 12/26

(54) **Graphical user interface for monitoring multiple events in a communications networks element**

(71) Applicant: Agilent Technologies, Inc. - a Delaware corporation -, Palo Alto, CA 94303-0870 (US)
(72) Inventor: Gourlay, Iain, Dunfermline KY127QP (GB)
(74) Representative: Coker, David Graeme

(57) **Abstract**

Multiple events occurring during operation of a communications network element are monitored by detecting occurrence of events of a predetermined kind occurring during operation of the network element. The times of occurrence of detected events are determined, and a summary display is generated indicating graphically the times for which at least one detected event occurred. In response to user input, choices are displayed of event information available for display in further detail, with choices including detected events highlighted.

## Description

### Technical Field

This invention relates to methods and apparatus for monitoring multiple events occurring during operation of a communications network element, for example during installation and maintenance of a communications link.

### Background Art

During installation and maintenance of communications network elements, such as switches, routers, cables and fibres, various kinds of test equipment are used to monitor operation of the network elements and gather data. These data relate to many different potential error and alarm conditions, and parametric values or events. Such data are typically collected at a frequency of 1Hz and over periods of time extending to days. For example, the commissioning of a new piece of network equipment may involve seven days of continuous testing, and subsequent maintenance activities could require monitoring of data over a period of thirty days. Clearly these activities can involve acquisition of huge quantities of discrete items of data, and the user needs to analyse these data to confirm suitability of the equipment for service or to diagnose the cause of any problems or variances from nominal operation that are detected. In particular the user needs to be able to locate and examine data items indicative of anomalous operation, even though these items are immersed in a much larger quantity of other data.

It is an object of this invention to facilitate the use and analysis of large quantities of data collected during testing of communications network elements.

### Disclosure of Invention

According to one aspect of this invention there is provided a method of monitoring multiple events occurring during operation of a communications network element, comprising the steps of:
detecting occurrence of events of a predetermined kind occurring during operation of the network element;
determining times of occurrence of detected events;
generating a summary display indicating graphically times for which at least one detected event occurred; and
responding to user input to display choices of event information available for display in further detail, with choices including detected events highlighted.

According to another aspect of this invention there is provided apparatus for monitoring multiple events occurring during operation of a communications network element, comprising:
a detector for detecting occurrence of events of a predetermined kind occurring during operation of the network element;
a clock for determining times of occurrence of detected events;
a display generator for generating a summary display indicating graphically times for which at least one detected event occurred; and
an input device for responding to user input to display choices of event information available for display in further detail, with choices including detected events highlighted.

### Brief Description of Drawings

A method and apparatus in accordance with this invention, for monitoring multiple events occurring during operation of a communications network element, will now be described, by way of example, with reference to the accompanying drawings, in which:
- Figure 1: is a block schematic diagram of apparatus for implementing the invention;
- Figure 2: is a block diagram of principal functions performed by the apparatus of Figure 1;
- Figures 3 and 4: show examples of displays of event information provided by the invention; and
- Figure 5: is a flow chart illustrating principal steps performed in implementing the invention.

### Best Mode for Carrying Out the Invention, & Industrial Applicability

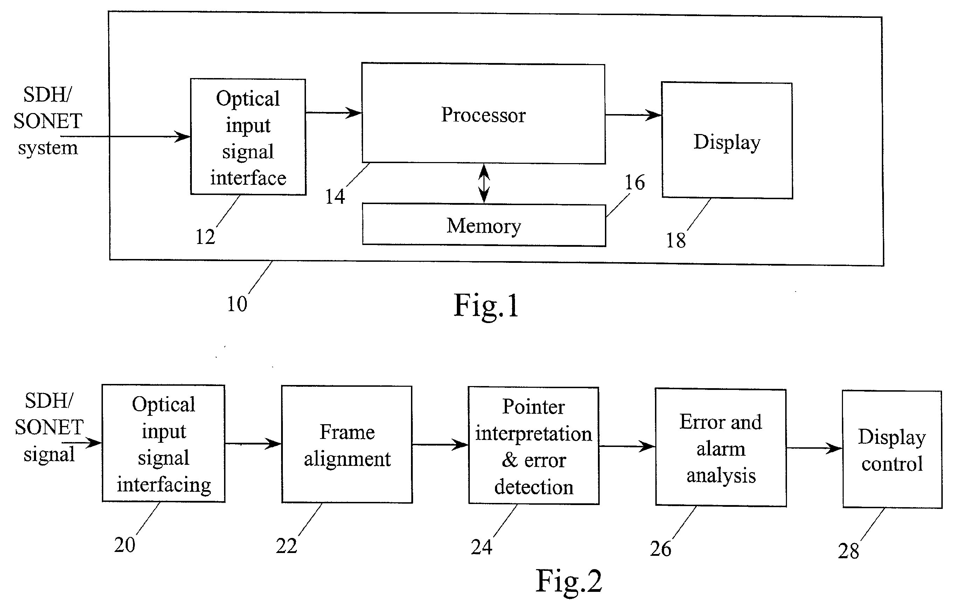

Referring to Figure 1, apparatus 10 for implementing the present invention comprises an optical interface 12 for receiving an input optical signal from, in this example, a Synchronous Digital Hierarchy (SDH) or Synchronous Optical Network (SONET) system or a network element of such a system. The interface 10 provides conversion to electrical form, recovery of clock data, analogue to digital conversion etc. The digital output data from the interface 12 are supplied to a processor 14 which processes the data to generate test results, stores the results in an associated memory 16, and further processes selected results to provide information via a display 18 to a user as described below, in accordance with software program instructions also stored in the memory 16.

Figure 2 illustrates the major functions undertaken by the processor 14 to implement the invention. Referring to Figure 2, optical interfacing 20 of a signal from an SDH or SONET system element under test is followed by frame alignment 22. This involves inspection of the digital data stream for a specific frame alignment pattern indicating the start of an SDH/SONET frame. The data stream and the frame alignment information are forwarded for pointer interpretation and error detection 24 which uses the frame alignment information to locate pointer bytes embedded in each frame, by their position relative to the start of a frame. After these bytes have been located known algorithms are applied to interpret the values of the pointer bytes, for example as described in International Telecommunication Union (ITU) Recommendations G.707 and G.783. For example an Alarm Indication Signal (AIS) is deemed to be active if the pointer bytes have the special value of all-1s, and a Loss Of Pointer (LOP) Alarm is indicated if a valid pointer value cannot be obtained. Pointer adjustments used to cope with mismatched tributary frequencies are recorded as positive and negative adjustment counts. A New Data Flag (NDF) is an event indicating a step adjustment of the pointer to take account of a network synchronisation event and this is communicated within reserved bytes using an embedded protocol. The design and operation of the interfacing function 20, frame alignment function 22 and pointer interpretation and error detection function 24 are well known to those skilled in the relevant art and need not be described in further detail here.

The output from the error detection function 24 also includes indications of other error and alarm conditions, derived in known manner, such as:
- occurrence of anomalous network events e.g. loss of power;
- errors in packet or cell counts e.g. number of received Gigabit Ethernet packets or Asynchronous Transfer Mode (ATM) cells;
- departure from nominal input signal characteristics e.g. optical power levels calculated using diode bias current measurements, or line rate frequency measured using clock recovery techniques;
- excessive signal jitter and wander as defined in relevant international specifications e.g. peak to peak jitter.

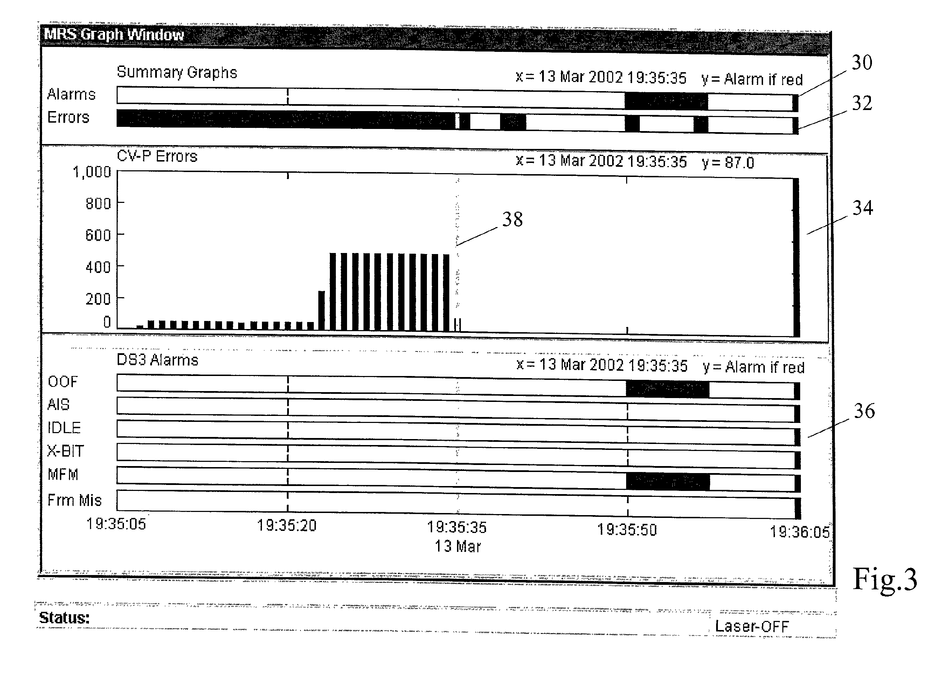

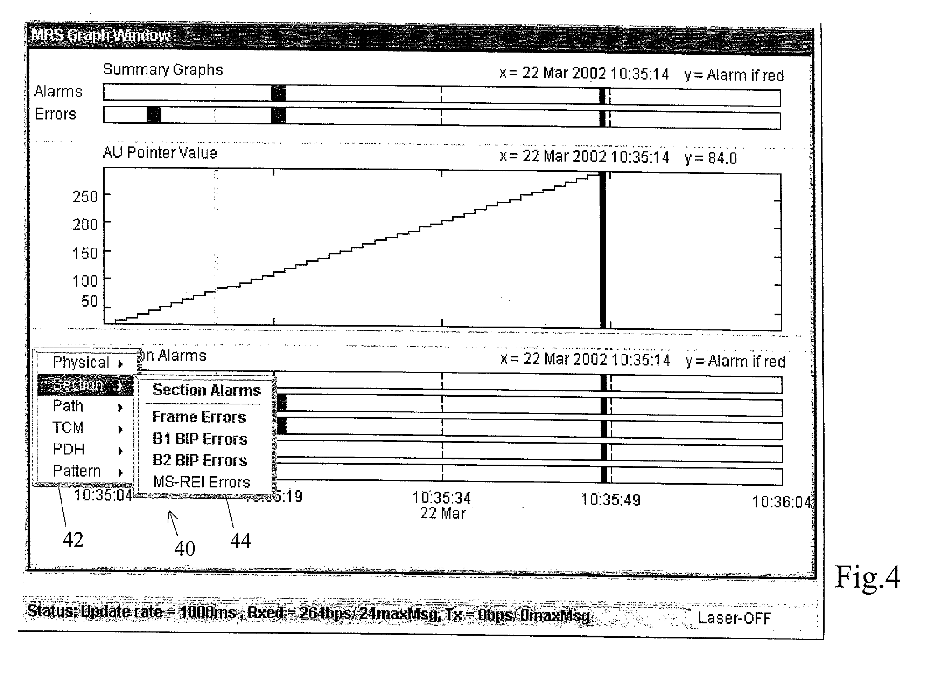

These indications are supplied for error and alarm analysis 26, to provide an output to a display control function 28 which assembles a graphical user interface presented via the display 18 and responds to user interaction with that interface. An example of the graphical user interface is shown in Figures 3 and 4.

Several features are provided to facilitate the exploration of large amounts of data in an efficient manner:
(a) The use of summary indicators to show time regions of interest.
(b) Cascaded menus to create a hierarchy of measurements grouped by relation.
(c) Annotation of the cascade menus to show data likely to be interest (e.g. typically in error).
(d) Time axis range scaling (zoom-in - zoom-out).
(e) Auto-scaling of y axis data views to avoid complex user interactions on both the X and Y axis.
(f) Cursor value annotation (avoiding the need to zoom on the Y axis).
(g) Maintaining time consistency throughout graph viewing.
(h) Allowing easy navigation to "next" and "previous" errors.
(i) Allowing the user to search for events matching a specified set of characteristics.
These features are particularly helpful in cases where the data events are sparsely distributed over a long period of time.

In the case of network element testing the data comprise a collection of time correlated graphs, so time is represented on the X axis and the data values on the Y axis.

Referring to Figure 3, two bars 30 and 32 are provided at the top of the display. These bars are summary indicators (feature (a) above) and are used to indicate the presence of any errors or alarms in the timeframe of interest. In effect these bars are generated by a logical OR operation on the occurrence of any error or alarm events at each time instant in the timeframe of interest. Two graph regions 34 and 36 below the summary bars 30 and 32 can be used to display data selection chosen from a "Select" menu (illustrated in Figure 4).

In the example shown the first region 34 contains a histogram and the second region 36 contains a group of related alarm tracks. Other graph types may be used, such as line graphs, minimum/maximum spread graphs and logarithmic scales. The time range embraces an interval of one minute, and comprises sixty data points each representing a duration of one second. The display can be controlled by the user to show different time ranges where all graphs show the same selected time range.

A cursor 38 is provided and this can be moved left and right under user control to allow panning along the time axis or to find the value of the data sample at that time. Annotation of values is included so that the graph presentation can be optimised for overall "shape" rather than detail.

In the example shown the errors summary bar 32 indicates the presence of errors throughout the time period 19:35:05 to 19:35:36, and intermittently thereafter in the remainder of the interval to 19:36:05. The errors in the first half of the interval are seen to be CV-P (code violation in the path level) errors, by reference to the upper graph region 34. The subsequent error indications in the errors summary bar 32 clearly relate to errors other than CV-P errors, as the graph region 34 is devoid of events for the latter part of the interval being displayed. Accordingly the user can see that it is appropriate to use the menu facilities (described below) to select another graph for display, using the menu annotations to assist this choice.

The alarm summary bar 30 reflects the presence of DS3-OOF and DS3-MFM alarms in the time interval 19:35:50 to 19:36:02, as shown in more detail in the graph region 36.

Typically the user may first use zoom-in and zoom-out operations (via a navigation menu described below) on the time axis in conjunction with the summary bars 30 and 32 to locate time zones of interest, that is time zones in which error or alarm events, or both, occurred. The user then makes selections via a graph select menu of desired graphs for more detailed display in the regions 34 and 36.

Two menus are provided in this example:
- a navigation menu and
- a select menu.
These menus could be integrated into a single menu but are preferably separated to distinguish actions relating to the entire session from actions related to the selected graph region. As well as facilitating user interaction with the menus, this split keeps the menus at a convenient size. The select menu is accessed, for example, by left-clicking with an input device (e.g. a mouse) on the desired graph region, whereas the navigation menu is accessed by right-clicking anywhere in the window.

The navigation menu provides access to the following features:
- Time Range Selection: 1 minute, 1 hour, 12 hours, etc.
- Go to Next Error or Alarm.
- Go to Previous Error or Alarm.
- Search invocation
- Exit

The Time Range selection allows the user to choose the time range displayed and provides a controlled means to zoom-in and zoom-out. All graphs display the same time range, as the measurements are viewed in a time correlated manner.

The Go to Next and Go to Previous selections facilitate navigation to points of interest, by scanning the stored data for the next/previous error or alarm and then automatically moving the cursor 38 to indicate the time of occurrence of the next/previous such event found, if necessary outside the time interval currently being displayed. This is particularly advantageous for large data collections that include only sparse errors, alarms or other events.

The Search/Find selection provides a user customisable search facility e.g. to find a point in time where CV-P errors exceeded 100 per second. Upon entry of the required search criteria the processor 14 scans the stored data to locate events or times for which the criteria are satisfied, and then moves the cursor 38 to indicate the relevant time.

Referring to Figure 4, the select menu 40 allows the user to choose which graph to display in the currently selected region 34 or 36, and is preferably implemented as a cascade menu, to introduce organisation and hierarchy into the collection of measurements to be made. Thus the overall select menu 40 comprises a first level menu 42 listing different kinds of data to be displayed, which in the illustrated example are:
- Physical (relating to the physical protocol layer)
- Section (discrete network segments)
- Path (multiplexer/demultiplexer end-to-end connection)
- TCM (tandem connection monitoring)
- PDH (Plesiochronous Digital Hierarchy)
- Pattern (pertaining to the data payload)
Each first level menu item has an associated set of second level choices. For example, the first level Section item has a second level menu 44 associated with it, providing choices among:
- Section Alarms
- Frame Errors
- B1 BIP Errors
- B2 BIP Errors
- MS-REI Errors

The process of choosing which graph to display is facilitated by highlighting of individual menu items to emphasise possible selections which contain data relating to errors or specific areas of interest (e.g. data containing events which are summarised in the error and alarm bars 30 and 32). This annotation may be achieved though the selection of different fonts, different font attributes (such as bold or italic text), and foreground/background colours. Thus, as shown in Figure 4, among the possible Section selections, four of them (Section Alarms, Frame Errors, B1 BIP Errors and B2 BIP Errors) are highlighted to indicate that these selections include data on alarm or error events which occurred during the time interval currently selected for investigation.

Further user assistance can be provided by means of icons or "tool-tips" (which appear when a user controlled pointer is held steady over a possible selection) to show a greater level of detail.

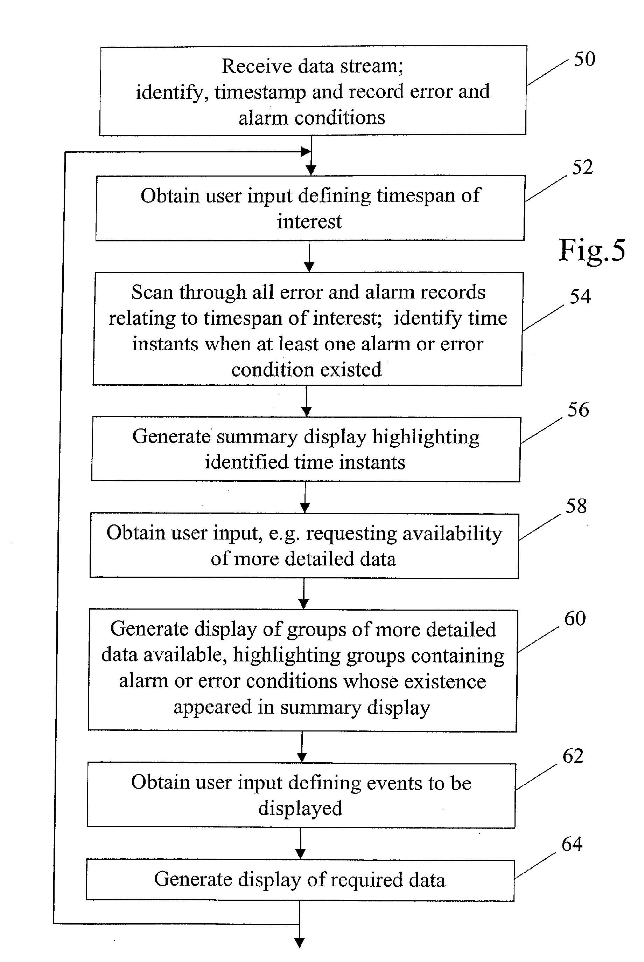

Figure 5 shows a procedure implemented by the processor 14 for generating and controlling a display such as that shown in Figures 3 and 4. For convenience and clarity this is shown as an ordered progression of steps. However, this procedure may readily be implemented in practice using an event-driven programming paradigm, in which the selection and sequence of successive steps is made at run time under user control.

At step 50 the processor receives the incoming data stream, and identifies timestamps and records error and alarm conditions and any other parameters of interest. At step 52, the processor obtains input from the user about the timespan (e.g. one minute) and time increment (e.g. sixty periods of 1 second each) of interest for which results are to be displayed (e.g. via the Time Axis Zoom/Range option in the navigation menu). The selected timespan and time increment are used at step 54 to control a scan through all the alarm and error records which occurred during that time interval. Every time increment is identified during which at least one alarm or error occurred, to enable that increment to be highlighted accordingly in the display of summary bars 30 and 32 (Figure 3).

At step 56 the results of the scan over the selected timespan are used to control production of a display such as that shown in Figure 3, summarizing the results which were recorded in that interval. Further user input is obtained at step 58, e.g. by the user clicking on a graph of interest to indicate that available options in relation to that graph should be shown, or to go to the next or previous alarm or error, or to specify search criteria. The user's request is acted upon at step 60, e.g. if the user clicks on a graph, by displaying the select menus 42 and 44 (Figure 4), including highlighting of groups of data containing alarm or error events whose existence (during the time interval of current interest) was shown in the summary display. At step 62 the user's selection from the options available is obtained, and the required more detailed display of data is provided at step 64. Thereafter, depending on user requirements, the procedure may return to step 52, or proceed to displays of other information.

## Claims

1. A method of monitoring multiple events occurring during operation of a communications network element, comprising the steps of:
detecting occurrence of events of a predetermined kind occurring during operation of the network element;
determining times of occurrence of detected events;
generating a summary display indicating graphically times for which at least one detected event occurred; and
responding to user input to display choices of event information available for display in further detail, with choices including detected events highlighted.

2. The method of claim 1, wherein the events of a predetermined kind comprise alarms.

3. The method of claim 1, wherein the events of a predetermined kind comprise errors.

4. The method of any one of the preceding claims, wherein the events of a predetermined kind occur at a plurality of physically spaced locations.

5. The method of any one of the preceding claims, wherein the network element is a data communications link.

6. Apparatus for monitoring multiple events occurring during operation of a communications network element, comprising:
a detector for detecting occurrence of events of a predetermined kind occurring during operation of the network element;
a clock for determining times of occurrence of detected events;
a display generator for generating a summary display indicating graphically times for which at least one detected event occurred; and
an input device for responding to user input to display choices of event information available for display in further detail, with choices including detected events highlighted.
